Europäisches Patentamt

European Patent Office

Office européen des brevets

(19)

(11) Veröffentlichungsnummer: **0 664 445 A2**

(12) **EUROPÄISCHE PATENTANMELDUNG**

(21) Anmeldenummer: **94119199.1**

(51) Int. Cl.6: **G01N 21/53**

(22) Anmeldetag: **06.12.94**

(30) Priorität: **21.01.94 DE 4401755**

(43) Veröffentlichungstag der Anmeldung:
**26.07.95 Patentblatt 95/30**

(84) Benannte Vertragsstaaten:
**AT BE CH DE DK ES FR GB IT LI NL SE**

(71) Anmelder: **HAGENUK GmbH**
**Postfach 11 49,**
**Westring 431-451**
**D-24118 Kiel (DE)**

(72) Erfinder: **Heyn, Klaus**
**Bei der Apostelkirche 7**
**D-20257 Hamburg (DE)**

(74) Vertreter: **Drömer, Hans-Carsten et al**
**Preussag AG,**
**Patente und Lizenzen,**
**Karl-Wiechert-Allee 4**
**D-30625 Hannover (DE)**

(54) **"Kombiniertes Sichtweiten- und Niederschlagsmessgerät".**

(57) Die Erfindung betrifft ein kombiniertes Sichtweiten- und Niederschlagsmeßgerät. Bei diesen Geräten ist für den Dauerbetrieb die Beobachtung der Scheibenverschmutzung von erheblicher Bedeutung. Bisher wird die Scheibenverschmutzung durch Beobachtung von Lichtstreueffekten an der verschmutzten Scheibenoberfläche registriert. Dies ist nicht sehr zuverlässig. Nach der Erfindung wird vorgeschlagen, in einem Gerät gleichzeitig oder zeitlich sehr eng aufeinanderfolgend eine Vorwärtsstreumessung und eine Transmissionsmessung durchzuführen. Aus den erhaltenen Meßwerten kann durch Kombination der Meßergebnisse die Beeinträchtigung des Meßsignales durch Verschmutzung der Scheiben kompensiert werden. Gleichzeitig bietet die Kombination der Meßsignale die Möglichkeit, Niederschlagsart und -menge zu beobachten. Hierdurch eignet sich das Gerät gleichermaßen als Sichtweitenmesser und als automatisierte Wetterbeobachtungsstation.

Fig.1

EP 0 664 445 A2

Die Erfindung betrifft ein kombiniertes Gerät zur Messung der Sichtweite und zur Niederschlagsbestimmung, insbesondere zur Unterscheidung zwischen verschiedenen Niederschlagsarten wie Regen, Nieselregen, Hagel, Schnee. Speziell wird hierbei auch die Bestimmung der Niederschlagsmenge möglich.

Das erfindungsgemäße Gerät besteht aus einer Lichtquelle und einem Empfänger in Vorwärtsstreuanordnung sowie wenigstens einem zweiten Empfänger, der in der optischen Achse des Senders zur Bestimmung der Transmission angeordnet ist.

Sender und Empfänger sind regelmäßig mit Nebeneinrichtungen zur Erzeugung geeigneter Strahlenbündel und mit Fenstern zur Abschirmung gegen Umwelteinflüsse versehen. Durch Ablagerungen auf den Fenstern entsteht ein Meßfehler, der zu kompensieren ist. Durch die Messung sowohl in Transmissions- als auch in Streulichtanordnung im gleichen Meßvolumen (definiert durch die Aperturen von Lichtsender und Streulichtempfänger) ist es möglich, den Einfluß der Fensterverschmutzung zu kompensieren. Da die zu beobachtenden Vorgänge zeitlich relativ langsam veränderlich sind, können die beiden Empfänger für zeitlich aufeinanderfolgende Teilmessungen der Transmission und der Streuung im wesentlichen mit einer einzigen Auswerteelektronik auskommen, wobei für die Streulichtmessung eine zusätzliche Vorverstärkung vorzusehen ist. Die Empfänger können jedoch auch mit jeweils eigener Auswerteelektronik versehen sein. Unter der Annahme, daß die Fenster der nebeneinanderliegenden Empfänger beide die gleiche Verschmutzung aufweisen und daß die absorbierenden Effekte der Fensterverschmutzung im wesentlichen allein die Transmission der Meßanordnung verfälschen, kann der durch die Fensterverschmutzung bewirkte Meßfehler in der Transmissionsmessung bestimmt werden beziehungsweise es ergibt sich die kompensierte, also von dem Meßfehler befreite Streuamplitude aus dem Verhältnis von gemessener Streuamplitude und gemessener Transmission. Hierbei kommt es nicht darauf an, die Verschmutzung der einzelnen Scheiben zu bestimmen, sondern die Kompensation der Scheibenverschmutzung für die Streulichtmessung erfolgt automatisch durch die Bildung des Quotienten der beiden oben genannten Meßwerte.

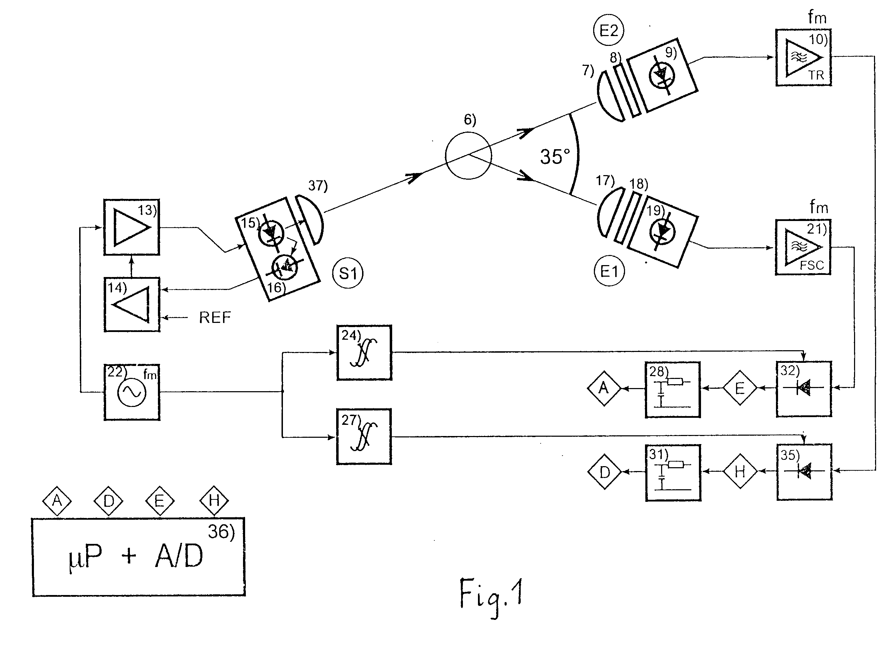

Anhand des in Figur 1 beigefügten Funktionsschemas wird der prinzipielle Aufbau eines erfindungsgemäßen kombinierten Sichtweiten- und Niederschlagsmeßgerätes dargestellt. Es bedeuten:

| | | |
|---|---|---|
| 6) | Meßvolumen | |
| 7) | Empfängeroptik und Gerätefenster E2 | |
| 8) | optischer Schmalbandfilter | |
| 9) | Empfängerdiode E2 mit Vorverstärker | |

| | | |
|---|---|---|
| 10) | Verstärker mit Bandpasscharakteristik für Transmissionsmessung E2, Mittenfrequenz **fm** | |
| 13) | LED-Treiberelektronik S1 | |
| 14) | Intensitätsregelung Sender S1 | |
| 15) | Sende-LED S1 | |
| 16) | Referenzphotodiode zur Intensitätsregelung | |
| 17) | Empfängeroptik und Gerätefenster E1 | |
| 18) | optischer Schmalbandfilter | |
| 19) | Emfpängerdiode E1 mit Vorverstärker | |
| 21) | Verstärker mit Bandpasscharqakteristik für Streulichtmessung E2, Mittenfrequenz **fm** | |
| 22) | Modulationsgenerator, Frequenz **fm** | |
| 24),27) | Pasenkorrektur zur Synchronsignalgenerierung | |
| 28) | Mittelwertbilder Streulichtmessung E1 | |
| 31) | Mittelwertbilder Transmissionsmessung E2 | |
| 32),35) | Synchrondemodulator | |
| 36) | Mikroprozessor für Überwachung und Auswertung | |
| 37) | Senderoptik und Gerätefenster S1 | |
| A | Mittelwert Streulichtmessung E1 (Sichtweite) | |
| D | Mittelwert Transmissionsmessung E2 (Kompensation) | |
| E | Momentanwert Streulichtmessung E1 (Niederschlag) | |
| H | Momentanwert Transmissionsmessung E2 (Niederschlag) | |

Die Messwerte A und D beinhalten den Mittelwert der jeweils gemessenen Streuamplitude beziehungsweise gemessenen Transmission. Die Werte können direkt einem Quotientenbildner zugeführt werden oder über entsprechende Speicher und ein Rechenwerk in einen Quotienten umgerechnet werden (36).

Die errechnete, korrigierte Streuamplitude wird dann unter Berücksichtigung einer gerätetypischen Kalibrierkonstante in einen Sichtweitenwert umgerechnet.

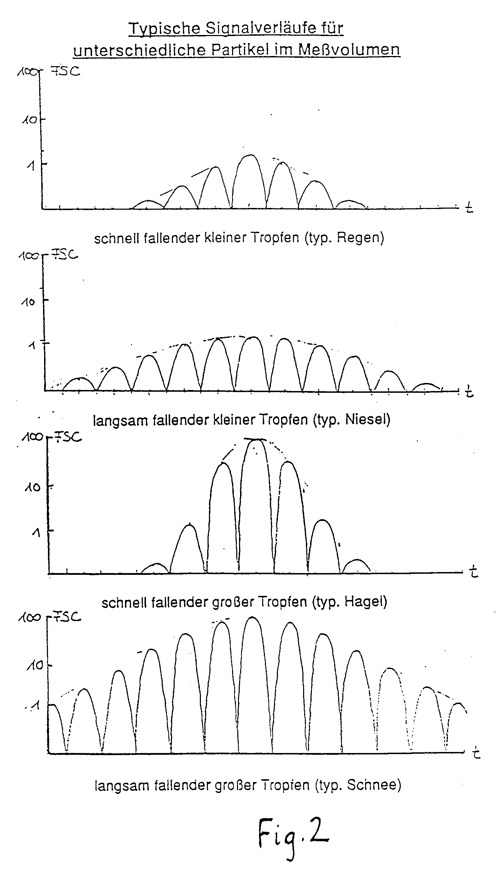

Zur Bestimmung der Niederschlagsart können der zeitliche Verlauf sowie die Amplituden des kompensierten Vorwärtsstreusignales und des Transmissionssignales (Momentanwerte E, H) herangezogen werden. Gemäß der als Figur 2 beigefügten schematischen Darstellung der Streuamplitude (Ordinate in logarithischem Maßstab) ergeben sich für die einzelnen Niederschlagstypen (Regen, Nieselregen, Hagel, Schnee) typische Signalamplituden und Zeitverläufe. Die einzelnen relativen Maxima in einem Streulicht entstehen durch die Modulation der Lichtquelle (LED, Spannungsverlauf nach Empfänger-Demodulator). Der Niederschlag wird demzufolge nach dem Prinzip eines Stroboskopes bei seiner Durchquerung des Meßvolumens mehrfach beleuchtet. Aus der Anzahl der bei der modulierten Beleuchtung vorwärtsgestreuten Wellenzüge kann auf die Geschwindigkeit des Niederschlages zurückgeschlossen werden. Aus der gleichzeitigen Beobachtung der Transmission kann bei bekannter Geschwindigkeit auf die Größe der den Niederschlag bildenden Tropfen beziehungsweise Partikel zurückgeschlossen werden, da die Gesamttrübung sich aus dem Volumenstrom der im Beobachtungsvolumen vorhandenen Partikel ergibt beziehungsweise bei bekannter Geschwindigkeit auf die einzelnen Volumina zurückgeschlossen werden kann. Damit ist aus der gleichzeitigen Messung von Streuung und Transmission nicht nur die Bestimmung der Art des Niederschlages sondern auch der Niederschlagsmenge möglich. (Für spezielle Anwendungen kann die Geschwindigkeit auch aus der Frequenzverschiebung der gestreuten Strahlung gegenüber der Beleuchtungsfrequenz bestimmt werden.)

Da die Annahme, daß die Verschmutzung bei beiden Empfängern identisch ist, nicht immer zutrifft, wird nach einer besonders bevorzugten Ausführung vorgesehen, einen weiteren Sender anzuordnen. Sender und Empfänger stehen einander dann in einer kreuzförmigen Anordnung gegenüber. Transmission und Streumessung in den einzelnen Beleuchtungsstrahlengängen beziehungsweise Empfangsstrahlengängen können dann mittels Teilmessungen kompensiert werden.

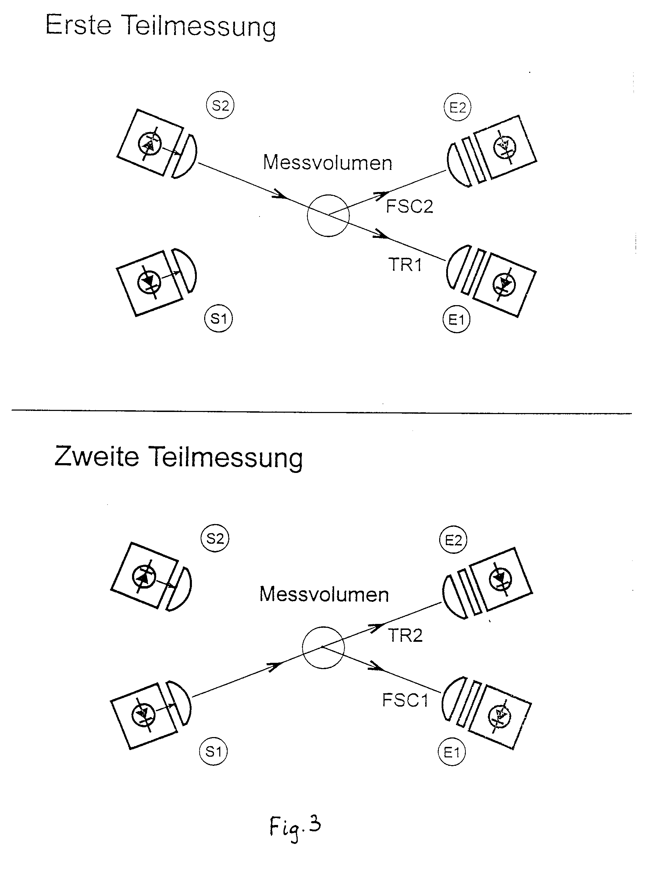

In Figur 3 ist das Kompensationsverfahren schematisch dargestellt.

In einer ersten Teilmessung wird die vom Sender S kommende Strahlung sowohl in Transmission- als auch in Streuung von Empfänger E1 beziehungsweise Empfänger E2 gemessen. Das von Empfänger E1 in Transmission registrierte Signal setzt sich zusammen aus der Intensität des Senders S2 und der Absorption beziehungsweise Transmission durch die Optik des Senders S2 und des Empfängers E1. In der Streumessung wird die gemessene Vorwärtsstreuung durch die Streuamplitude im Meßvolumen und die Absorption (beziehungsweise Transmission) durch die Optik des Senders S2 und des Empfängers E2 bestimmt.

In der zweiten Teilmessung werden die entsprechenden Signale in umgekehrter Anordnung ermittelt. Für normierte Signale aus den einzelnen Teilmessungen der Transmission und der Streuamplitude ergibt sich das korrigierte Signal zu

$$FSC = \frac{FSC1 \times FSC2}{TR1 \times TR2}$$

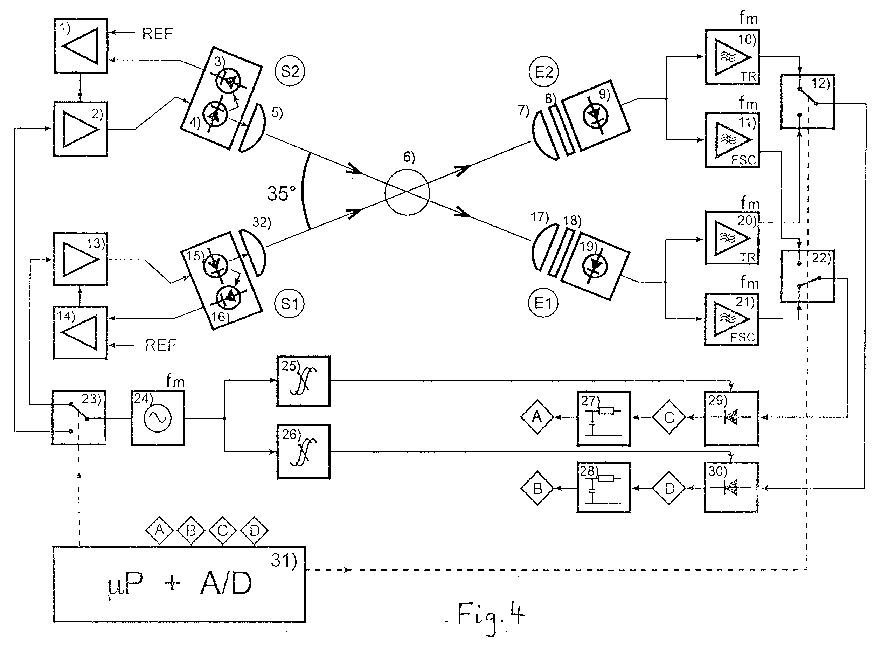

Die Teilmessungen können zeitlich aufeinanderfolgend durchgeführt werden. Der entsprechende Aufbau ist in der schematischen Darstellung in Figur 4 wiedergegeben. Im einzelnen bedeuten:

| | | |
|---|---|---|
| 1) | Intensitätsreglung Sender S2 |
| 2) | LED-Treiberelektronik |
| 3) | Referenzphotodiode zur Intensitätsregelung |
| 4) | Sender-LED S2 |
| 5) | Senderoptik und Gerätefenster S2 |
| 6) | Meßvolumen |
| 7) | Empfängeroptik und Gerätefenster E2 |
| 8) | optischer Schmalbandfilter |
| 9) | Empfängerdiode E2 mit Vorverstärker |
| 10) | Verstärker mit Bandpasscharakteristik für Transmissionsmessung E2, Mittenfrequenz **fm** |
| 11) | Verstärker mit Bandpasscharakteristik für Streulichtmessung E2, Mittenfrequenz **fm** |
| 12) | Umschalr Transmissionsmessung |
| 13) | LED-Treiberelektronik S1 |
| 14) | Intensitätsregelung Sender S1 |
| 15) | Sende-LED S1 |
| 16) | Referenzphotodiode zur Intensitätsregelung |
| 17) | Empfängeroptik und Gerätefenster E1 |
| 18) | optischer Schmalbandfilter |
| 19) | Empfängerdiode E1 mit Vorverstärker |
| 20) | Verstärker mit Bandpasscharakteristik für Transmissionsmessung E1, Mittenfrequenz **fm** |
| 21) | Verstärker mit Bandpasscharakteristik für Streulichtmessung E2, Mittenfrequenz **fm** |
| 22) | Umschlater Streulichtmessung E1/E2 |
| 23) | Umschalter Sender S1/Sender S2 |
| 24) | Modulationsgenerator |
| 25),26) | Phasenkorrektur zur Synchronsignalgenerierung |
| 27) | Mittelwertbilder Streulichtmessung |
| 28) | Mittelwertbilder Transmissionsmessung |
| 29),30) | Synchrondemodulator |
| 31) | Mikroprozessor mit Analog-/Digital-Wandlung für Steuerung und Auswertung |
| 32) | Senderoptik und Gerätefenster S1 |
| A | Mittelwert Streulichtmessung (Sichtweite) |
| B | Mittelwert Transmissionsmessung (Kompensation) |
| C | Momentanwert Streulichtmessung (Niederschlag) |

D    Momentanwert    Transmissionsmessung (Niederschlag)

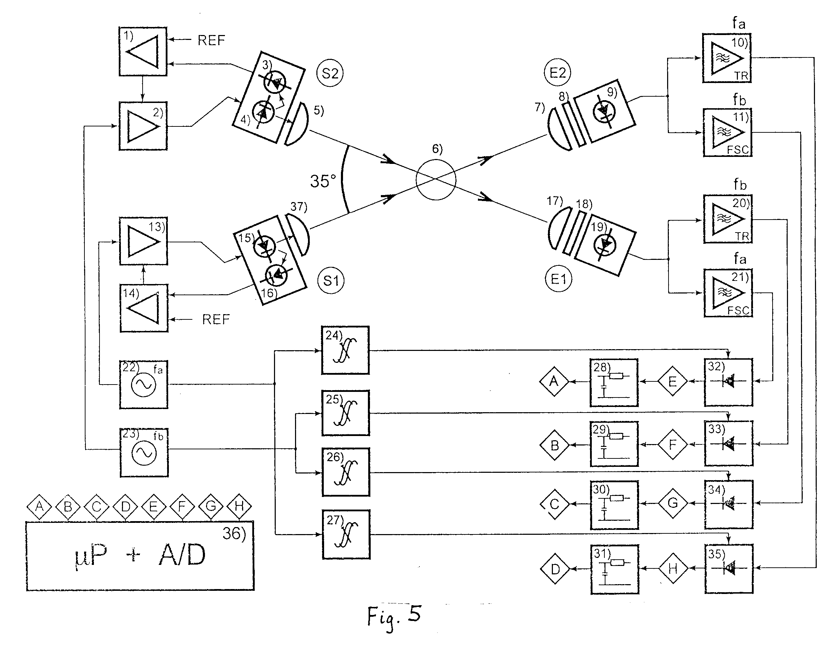

In einem schematisch in Figur 5 dargestellten Aufbau ist aber auch die gleichzeitige Durchführung von erster und zweiter Teilmessung möglich, wenn Sender 1 und Sender 2 mit unterschiedlichen Modulationsfrequenzen (fa, fb)betrieben werden und in den Empfängern entsprechende, auf die jeweilige Modulationsfrequenz abgestimmte Auswerteeinrichtungen (32 bis 35) angeordnet sind. Je nach Güte und Trennschärfe der Empfängerverstärker müssen die Modulationsfrequenzen einen ausreichenden Abstand aufweisen.

Im einzelnen bedeuten:

1)
Intensitätsregelung Sender S2
2)
LED-Treiberelektronik
3)
Referenzphotodiode zur Intensitätsregelung
4)
Sender-LED S2
5)
Senderoptik und Gerätefenster S2
6)
Meßvolumen
7)
Empfängeroptik und Gerätefenster E2
8)
optischer Schmalbandfilter
9)
Empfängerdiode E2 mit Vorverstärker
10)
Verstärker mit Bandpasscharakteristik für Transmissionsmessung E2, Mittenfrequenz **fm**
11)
Verstärker mit Bandpasscharakteristik für Streulichtmessung E2, Mittenfrequenz **fm**
13)
LED-Treiberelektronik S1
14)
Intensitätsregelung Sender S1
15)
Sende-LED S1
16)
Referenzphotodiode zur Intensitätsregelung
17)
Empfängeroptik und Gerätefenster E1
18)
optischer Schmalbandfilter
19)
Empfängerdiode E1 mit Vorverstärker
20)
Verstärker mit Bandpasscharakteristik für Transmissionsmessung E1, Mittenfrequenz **fm**
21)
Verstärker mit Bandpasscharakteristik für Streulichtmessung E2, Mittenfrequenz **fm**

22)
Modulationsgenerator, Frequenz **fa**
23)
Modulationsgenerator, Frequenz **fb**
24),25) 26),27)
Phasenkorrektur zur Synchronsignalgenerierung
28)
Mittelwertbilder Streulichtmessung E1
29)
Mittelwertbilder Transmissionsmessung E1
30)
Mittelwertbilder Streulichtmessung E2
31)
Mittelwertbilder Transmissionsmessung E2
32),33) 34),35)
Synchrondemodulator
36)
Mikroprozessor für Überwachung und Auswertung
37)
Senderoptik und Gerätefenster S1
A
Mittelwert Streulichtmessung E1 (Sichtweite)
B
Mittelwert Transmissionsmessung E1 (Kompensation)
C
Mittelwert Streulichtmessung E2 (Sichtweite)
D
Mittelwert Transmissionsmessung E2 (Kompensation)
E
Momentanwert Streulichtmessung E1 (Niederschlag)
F
Momentanwert Transmissionsmessung E1 (Niederschlag)
G
Momentanwert Streulichtmessung E2 (Niederschlag)
H
Momentanwert Transmissionsmessung E2 (Niederschlag)

**Patentansprüche**

1.    Kombiniertes Sichtweiten- und Niederschlagsmeßgerät bestehend aus wenigstens einem Sender und einem Empfänger in Vorwärtsstreuanordnung, wobei der Sender mit einer Treiberelektronik und der Empfänger mit einer Auswerteelektronik verbunden ist und wenigstens einem zusätzlichen Empfänger, der dem Sender in Transmissionsanordnung gegenübersteht,
dadurch gekennzeichnet, daß
ein weiterer Sender dem ersten Empfänger gegenübersteht.

2. Kombiniertes Sichtweiten- und Niederschlagsmeßgerät, bei der Empfänger in der Auswerteeinrichtung mit schaltbarem Verstärker mit Bandpaßcharakteristik versehen sind und beide Verstärker auf Transmissionbeziehungsweise Streumessung umschaltbar sind.

3. Kombiniertes Sichtweiten- und Niederschlagsmeßgerät nach Anspruch 1, dadurch gekennzeichnet, daß
die Sender mit Modulationsgeneratoren mit unterschiedlicher Frequenz versehen sind und daß jeder Empfänger eine Auswerteeinrichtung für jede der beiden Modulationsfrequenzen aufweist.

Fig.1

## Typische Signalverläufe für unterschiedliche Partikel im Meßvolumen

schnell fallender kleiner Tropfen (typ. Regen)

langsam fallender kleiner Tropfen (typ. Niesel)

schnell fallender großer Tropfen (typ. Hagel)

langsam fallender großer Tropfen (typ. Schnee)

Fig. 2

# Erste Teilmessung

Messvolumen

FSC2

TR1

# Zweite Teilmessung

Messvolumen

TR2

FSC1

Fig. 3

Fig. 4

Fig. 5

EP 0 664 445 A2